# EUROPEAN PATENT APPLICATION

(11) **EP 1 628 225 A2**
(43) Date of publication of application: **22.02.2006**
(21) Application number: 05106701.5
(22) Date of filing: 21.07.2005
(51) Int. Cl.: G06F 13/16, G06F 13/42

(54) **Bus speed multiplier in a memory subsystem**

(30) Priority: 30.07.2004 US 903182
(71) Applicant: International Business Machines Corporation, Armonk, N.Y. 10504 (US)
(72) Inventor: DELL, Timothy, SO21 2JN, Winchester (GB); GOWER, Kevin, SO21 2JN, Winchester (GB); KARK, Kevin, SO21 2JN, Winchester (GB); KELLOGG, Mark, SO21 2JN, Winchester (GB); MAULE, Warren, SO21 2JN, Winchester (GB)
(74) Representative: Litherland, David Peter

(57) **Abstract**

A memory subsystem for providing a bus speed multiplier. The memory subsystem includes one or more memory modules operating at a memory module data rate. The memory subsystem also includes a memory controller and one or more memory busses. The memory busses operate at four times the memory module data rate. The memory controller and the memory modules are interconnected by a packetized multi-transfer interface via the memory busses.

## Description

### Technical field

The invention relates to a memory subsystem with a bus speed multiplier.

### Background art

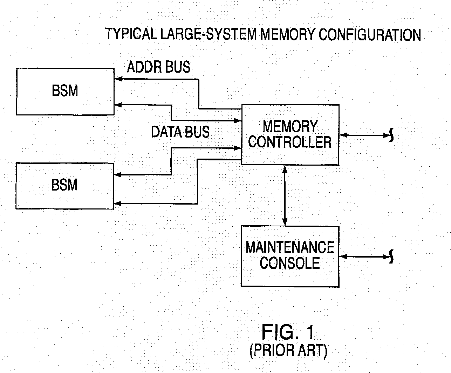

Computer memory subsystems have evolved over the years, but continue to retain many consistent attributes. Computer memory subsystems from the early 1980's, such as the one disclosed in U.S. Patent Number 4,475,194 to LeVallee et al, of common assignment herewith, included a memory controller, a memory assembly (contemporarily called a basic storage module (BSM) by the inventors) with array devices, buffers, terminators and ancillary timing and control functions, as well as several point-to-point busses to permit each memory assembly to communicate with the memory controller via its own point-to-point address and data bus. FIG. 1 depicts an example of this early 1980 computer memory subsystem with two BSMs, a memory controller, a maintenance console, and point-to-point address and data busses connecting the BSMs and the memory controller.

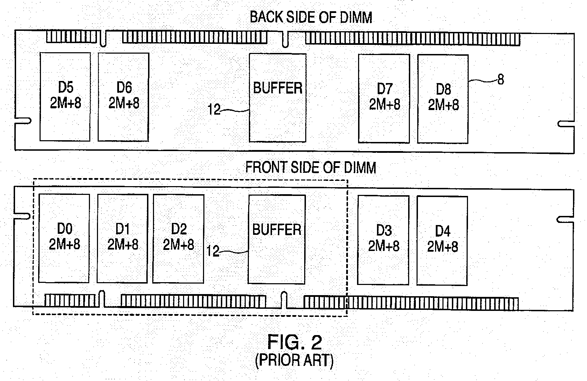

FIG. 2, from U.S. Patent Number 5,513,135 to Dell et al, of common assignment herewith, depicts an early synchronous memory module, which includes synchronous dynamic random access memories (DRAMs) 8, buffer devices 12, an optimized pinout, an interconnect and a capacitive decoupling method to facilitate operation. The patent also describes the use of clock re-drive on the module, using such devices as phase lock loops (PLLs).

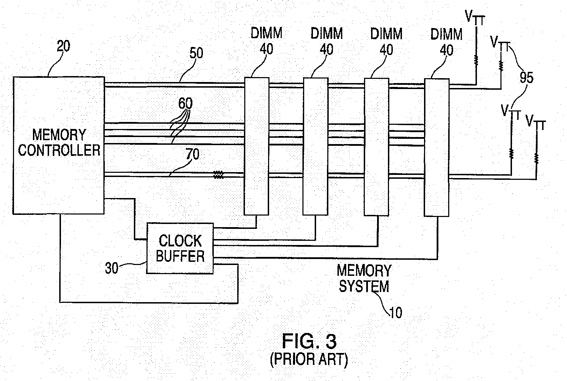

FIG. 3, from U.S. Patent Number 6,510,100 to Grundon et al, of common assignment herewith, depicts a simplified diagram and description of a memory subsystem 10 that includes up to four registered dual inline memory modules (DIMMs) 40 on a traditional multi-drop stub bus channel. The subsystem includes a memory controller 20, an external clock buffer 30, registered DIMMs 40, address bus 50, control bus 60 and a data bus 70 with terminators 95 on the address bus 50 and data bus 70.

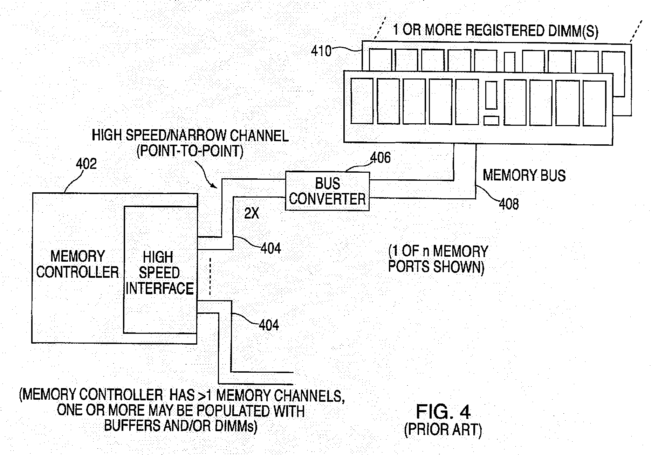

FIG. 4 depicts a 1990's memory subsystem which evolved from the structure in FIG. 1 and included a memory controller 402, one or more high speed point-to-point channels 404, each connected to a bus-to-bus converter chip 406, and each having a synchronous memory interface 408 that enables connection to one or more registered DIMMs 410. In this implementation, the high speed, point-to-point channel 404 operated at twice the DRAM data rate, allowing the bus-to-bus converter chip 406 to operate one or two registered DIMM memory channels at the full DRAM data rate. Each registered DIMM included a PLL, registers, DRAMs, an electrically erasable programmable read-only memory (EEPROM) and terminators, in addition to other passive components.

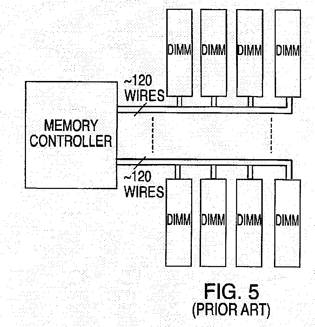

As shown in FIG. 5, memory subsystems were often constructed with a memory controller connected either to a single memory module, or to two or more memory modules interconnected on a 'stub' bus. FIG. 5 is a simplified example of a multi-drop stub bus memory structure, similar to the one shown in FIG. 3. This structure offers a reasonable tradeoff between cost, performance, reliability and upgrade capability, but has inherent limits on the number of modules that may be attached to the stub bus. The limit on the number of modules that may be attached to the stub bus is directly related to the data rate of the information transferred over the bus. As data rates increase, the number and length of the stubs must be reduced to ensure robust memory operation. Increasing the speed of the bus generally results in a reduction in modules on the bus, with the optimal electrical interface being one in which a single module is directly connected to a single controller, or a point-to-point interface with few, if any, stubs that will result in reflections and impedance discontinuities. As most memory modules are sixty-four or seventy-two bits in data width, this structure also requires a large number of pins to transfer address, command, and data. One hundred and twenty pins are identified in FIG. 5 as being a representative pincount.

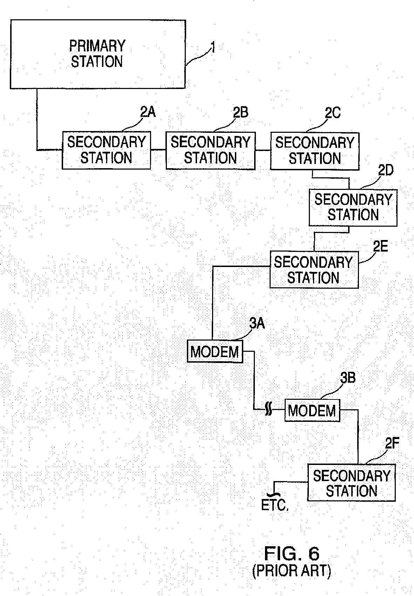

FIG. 6, from U.S. Patent Number 4,723,120 to Petty, of common assignment herewith, is related to the application of a daisy chain structure in a multipoint communication structure that would otherwise require multiple ports, each connected via point-to-point interfaces to separate devices. By adopting a daisy chain structure, the controlling station can be produced with fewer ports (or channels), and each device on the channel can utilize standard upstream and downstream protocols, independent of their location in the daisy chain structure.

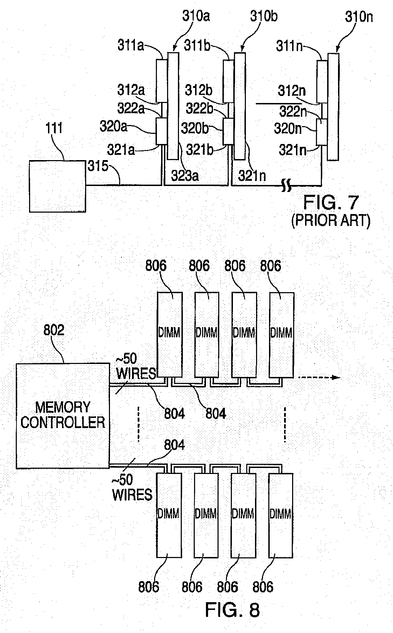

FIG. 7 represents a daisy chained memory bus, implemented consistent with the teachings in U.S. Patent Number 4,723,120. The memory controller 111 is connected to a memory bus 315, which further connects to module 3I0a. The information on bus 315 is re-driven by the buffer on module 310a to the next module, 3I0b, which further re-drives the bus 315 to module positions denoted as 310n. Each module 310a includes a DRAM 311a and a buffer 320a. The bus 315 may be described as having a daisy chain structure, with each bus being point-to-point in nature.

One drawback to the use of a daisy chain bus is that it increases the probability of a failure causing multiple memory modules to be affected along the bus. For example, if the first module is non-functional, then the second and subsequent modules on the bus will also be non-functional.

### Disclosure of the invention

One aspect of the present invention provides a memory subsystem with a bus speed multiplier. The memory subsystem includes one or more memory modules operating at a memory module data rate. The memory subsystem also includes a memory controller and one or more memory busses. In a preferred embodiment, the memory busses operate at four times the memory module data rate. The memory controller and the memory modules are interconnected by a packetized multi-transfer communications interface via the memory busses.

According to another aspect of the invention, there is provided a method of operating a memory subsystem. The method includes transmitting or re-driving a downstream frame of bits to a next memory module on a downstream memory bus in response to receiving the downstream frame of bits from the downstream memory bus. The downstream memory bus operates at four times a memory module data rate. The received downstream frame (or "packet") is converted into the memory module data rate and the downstream frame is processed in response to the converting. An upstream frame of bits is transmitted to a previous memory module or controller in the upstream bus in response to receiving the upstream of frame of bits from an upstream memory bus.

### Brief description of the drawings

Referring now to the drawings wherein like elements are numbered alike in the several FIGURES:

FIG. 1 depicts a prior art memory controller connected to two buffered memory assemblies via separate point-to-point links;

FIG. 2 depicts a prior art synchronous memory module with a buffer device;

FIG. 3 depicts a prior art memory subsystem using registered DIMMs;

FIG. 4 depicts a prior art memory subsystem with point-to-point channels, registered DIMMs, and a 2:1 bus speed multiplier

FIG. 5 depicts a prior art memory structure that utilizes a multidrop memory 'stub' bus;

FIG. 6 depicts a prior art daisy chain structure in a multipoint communication structure that would otherwise require multiple ports;

FIG. 7 depicts a prior art daisy chain connection between a memory controller and memory modules;

FIG. 8 depicts a cascaded memory structure that is utilized by exemplary embodiments of the present invention;

FIG. 9 depicts a memory structure with cascaded memory modules and unidirectional busses that is utilized by exemplary embodiments of the present invention;

FIG. 10 depicts a buffered memory module that is utilized by exemplary embodiments of the present invention;

FIG. 11 depicts a buffered module wiring system that is utilized by exemplary embodiments of the present invention;

FIG. 12 depicts bus and DRAM timing diagrams showing the four to one bus speed multiplier that is utilized by exemplary embodiments of the present invention; and

FIG. 13 depicts a downstream frame format that is utilized by exemplary embodiments of the present invention.

### Mode(s) for carrying out the invention

Exemplary embodiments of the present invention provide a high speed and high reliability memory subsystem architecture and interconnect structure that includes a single-ended point-to-point interconnection between any two subsystem components. The memory subsystem further includes a memory control function, one or more memory modules, one or more high speed busses operating at a four-to-one speed ratio relative to the DRAM data rate and a bus-to-bus converter chip on each of one or more cascaded modules to convert the high speed bus(ses) into the conventional double data rate (DDR) memory interface. The memory modules operate as slave devices to the memory controller, responding to commands in a deterministic or non-deterministic manner, but do not self-initiate unplanned bus activity other than the reporting of operational errors. Memory modules can be added to the cascaded bus, with each module assigned an address to permit unique selection of each module on the cascaded bus. Exemplary embodiments of the present invention include a packetized multi-transfer interface which utilizes an innovative communication protocol to permit memory operation to occur on a reduced pincount, whereby address, command and data is transferred between the components on the cascaded bus over multiple cycles, and are reconstructed and errors corrected prior to being used by the intended recipient.

FIG. 8 depicts a cascaded memory structure that may be utilized by exemplary embodiments of the present invention when buffered memory modules 806 (e.g., the buffer device is included within the memory module 806) are in communication with the memory controller 802. This memory structure includes a memory controller 802 in communication with one or more memory modules 806 via a high speed point-to-point bus 804. Each bus 804 in the exemplary embodiment depicted in FIG. 8 includes approximately fifty high speed wires for the transfer of address, command, data and clocks. By using point-to-point busses as described in the aforementioned prior art, it is possible to optimize the bus design to permit significantly increased data rates, as well as to reduce the bus pincount by transferring data over multiple cycles. Whereas FIG. 4 depicts a memory subsystem with a two to one ratio between the data rate on any one of the busses connecting the memory controller to one of the bus converters (e.g., to 1,066Mb/s per pin) versus any one of the busses between the bus converter and one or more memory modules (e.g., to 533 Mb/s per pin), an exemplary embodiment of the present invention, as depicted in FIG. 8, provides a four to one bus speed ratio to maximize bus efficiency and minimize pincount.

Although point-to-point interconnects permit higher data rates, overall memory subsystem efficiency must be achieved by maintaining a reasonable number of memory modules 806 and memory devices per channel (historically four memory modules with four to thirty-six chips per memory module, but as high as eight memory modules per channel and as few as one memory module per channel). Using a point-to-point bus necessitates a bus re-drive function on each memory module, to permit memory modules to be cascaded such that each memory module is interconnected to other memory modules as well as to the memory controller 802.

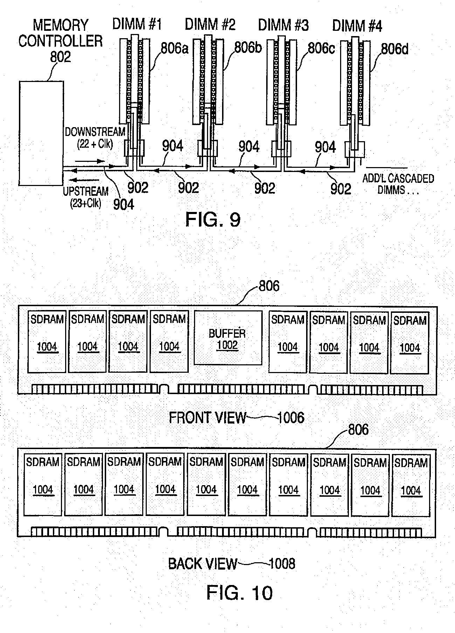

FIG. 9 depicts a memory structure with cascaded memory modules and unidirectional busses that is utilized by exemplary embodiments of the present invention if all of the memory modules 806 are buffered memory modules 806. One of the functions provided by the memory modules 806 in the cascade structure is a re-drive function to send signals on the memory bus to other memory modules 806 or to a memory controller 802. FIG. 9 includes a memory controller 802 and four memory modules 806a, 806b, 806c and 806d, on each of two memory busses (a downstream memory bus 904 and an upstream memory bus 902), connected to the memory controller 802 in either a direct or cascaded manner. Memory module 806a is connected to the memory controller 802 in a direct manner. Memory modules 806b, 806c and 806d are connected to the controller 802 in a cascaded manner.

An exemplary embodiment of the present invention includes two unidirectional busses between the memory controller 802 and memory module 806a ("DIMM #1") as well as between each successive memory module 806b-d ("DIMM #2", "DIMM #3" and "DIMM #4") in the cascaded memory structure. The downstream memory bus 904 is comprised of twenty-two single-ended signals and a differential clock pair. The downstream memory bus 904 is used to transfer address, control, data and error code correction (ECC) bits downstream from the memory controller 802, over several clock cycles, to one or more of the memory modules 806 installed on the cascaded memory channel. The upstream memory bus 902 is comprised of twenty-three single-ended signals and a differential clock pair, and is used to transfer bus-level data and ECC bits upstream from the sourcing memory module 806 to the memory controller 802. Using this memory structure, and a four to one data rate multiplier between the DRAM data rate (e.g., 400 to 800 Mb/s per pin) and the unidirectional memory bus data rate (e.g., 1.6 to 3.2 Gb/s per pin), the memory controller 802 signal pincount, per memory channel, is reduced from approximately one hundred and twenty pins to about fifty pins.

FIG. 10 depicts a front view 1006 and a back view 1008 of a buffered memory module 806 that is utilized by exemplary embodiments of the present invention. In exemplary embodiments of the present invention, each memory module 806 includes a blank card having dimensions of approximately six inches long by one and a half inches tall, eighteen DRAM positions, a buffer device 1002, and numerous small components as known in the art that are not shown (e.g., capacitors, resistors, EEPROM.) In an exemplary embodiment of the present invention, the dimension of the card is 151.35 mm long by 30.5 mm tall. In an exemplary embodiment of the present invention, the buffer device 1002 is located in the center region of the front side of the memory module 806, as depicted in the front view 1006 in FIG. 10. The synchronous DRAMS (SDRAMS) 1004 are located on either side of the buffer device 1002, as well as on the backside of the memory module 806, as depicted in the back view 1008 in FIG. 10. The configuration may be utilized to facilitate high speed wiring to the buffer device 1002 as well as signals from the buffer device to the SDRAMs 1004.

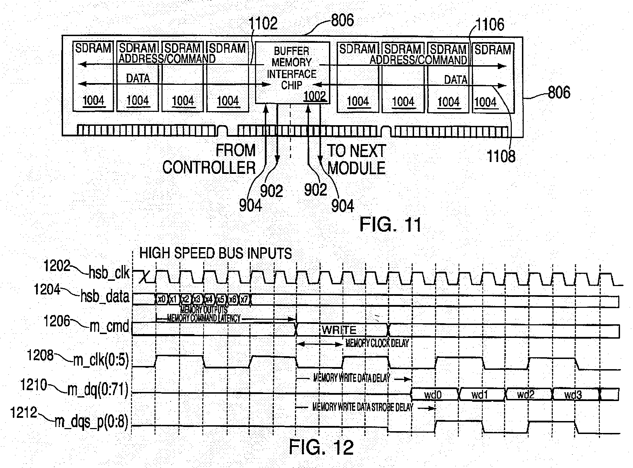

FIG. 11 depicts a buffered module wiring system that is utilized by exemplary embodiments of the present invention. FIG. 11 is a pictorial representation of the memory module 806 depicted in FIG. 10, with shaded arrows representing the primary signal flows. The signal flows include the upstream memory bus 902, the downstream memory bus 904, address and command busses 1102 and 1106, and data busses 1104 and 1108. In an exemplary embodiment of the present invention, the buffer device 1002, also referred to as a memory interface chip, provides two copies of the address and command signals to the SDRAMs 1004 with a right address and command bus 1106 exiting from the right side of the buffer device 1002 for the SDRAMs 1004 located to the right side and behind the buffer device 1002 on the right, and a left address and command bus 1102 bus exiting from the left side of the buffer device 1002 and connecting to the SDRAMs 1004 to the left side and behind the buffer device 1002 on the left. Similarly, the data bits intended for SDRAMs 1004 to the right of the buffer device 1002 exit from the right of the buffer device 1002 on a right data bus 1108. The data bits intended for the left side of the buffer device 1002 exit from the left of the buffer device 1002 on a left data bus 1104. The high speed upstream memory bus 902 and downstream memory bus 904 exit from the lower portion of the buffer device 1002, and connect to a memory controller or other memory modules either upstream or downstream of this memory module 806, depending on the application. The buffer device 1002 receives signals that are four times the memory module data rate and converts them into signals at the memory module data rate as described below in reference to FIG. 12.

FIG. 12 depicts bus and SDRAM timing diagrams showing the four to one bus speed multiplier that is utilized by exemplary embodiments of the present invention. FIG. 12 is a simplified "write" timing diagram that demonstrates the bus timing relationships for a write cycle in the preferred embodiment. The same approach may be taken for other cycles, such as a read cycle. The high speed bus clock (hsb_clk) 1302 is the notation for the positive side of the differential clock that travels with the high speed data traveling downstream from the memory controller 802 to the first memory module 806, or DIMM. Even though the hsb_clk 1302 is shown as being single-ended, in exemplary embodiments of the present invention, a differential clock is utilized to reduce clock sensitivity to external noise and coupling. The high speed data signal (hsb_data) 1204 shows a burst of eight transfers, operating at a double data rate speed (i.e., data is valid on both edges of the clock), which in this example constitutes a single frame of address, command and data to the first memory module 806 position. With the aforementioned downstream bus width of twenty-two bits, and the burst of eight, a full frame can constitute up to one hundred and seventy-six unique bits, depending on the assignment or use of these bits and the actual wires on the bus. This width is more than adequate to provide the approximately one hundred and twenty memory signals defined as being required by the memory module in FIG. 5, thereby enabling additional information to be included in the frame to further enhance overall system reliability, fault survivability and/or performance.

Also as shown in FIG. 12, the eight bits occur over four of the hsb_clk cycle times, at which point this example shows no further activity on the high speed bus. The local memory clock (m_clk) 1208 on the memory module 806 is derived from the hsb_clk 1202, and is shown as a single-ended signal m_clk (0:5) operating at one quarter the frequency of the hsb_clk 1202. Although shown as a single-ended clock, in an exemplary embodiment of the present invention, the m_clk 1208 would also operate as a differential clock. The decoded memory command signifying a 'write' operation to double data rate (DDR2) memory devices, or SDRAMS 1004 on the memory module 806, is shown on the signal labeled m_cmd 1206. This command is decoded from the high speed bus and is driven by the buffer to the DDR2 DRAMS 1004 to ensure arrival at the SDRAMs 1004 prior to the rising edge of the clock at the SDRAMs 1004. The seventy-two bits of data written to the DDR2 SDRAMs 1004 is shown as m_dq(0:71) 1210, and is shown arriving at the SDRAMs 1004 one full memory clock after the write command is decoded, as a DDR signal relative to the m_clk 1208. In an exemplary embodiment of the present invention, the data, or m_dq(0:71) 1210 is single ended. The nine DDR data strobes (m_dqs_p) 1212 are also shown, as single ended signals, switching one quarter of a clock cycle prior to the DDR2 SDRAMs 1008, thereby ensuring that the strobe switches approximately in the center of each valid write data bit. In an exemplary embodiment of the present invention, the m_dqs_p 1212 is differential. This diagram demonstrates a burst of four data bits to the SDRAMs 1004 (wd0 through wd3), with seventy-two bits of memory data being provided to the memory devices every memory clock cycle. In this manner, the data rate of the slower memory modules 806 is matched to the high-speed memory bus that operates at four times the speed of the memory modules.

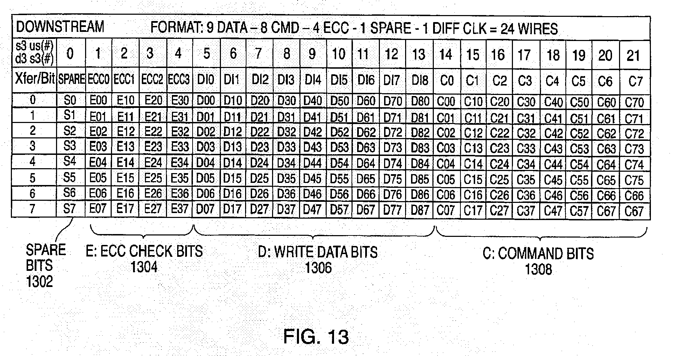

FIG. 13 depicts a downstream frame format that is utilized by exemplary embodiments of the present invention to transfer information downstream from the memory controller 802 to the memory modules 806. In an exemplary embodiment of the present invention, the downstream frame consists of eight transfers, with each transfer including twenty-two signals and a differential clock (twenty-four wires total). The frame further consists of eight command wires (c0 through c7) 1308, nine data wires (di0 through di8) 1306, four bus ECC (Error Correcting Code) wires (ecc0 through ecc3) 1304 and a spare wire (spare) 1302. The seventy-two data bits referenced in the timing diagram of FIG. 12 are shown in FIG. 13 as bits di0 through di8, and consist of nine wires with eight transfers on each wire for each frame. The numbering of each data bit, as well as for other bits, is based on the wire used as well as the specific transfer. D34 refers to data bit 3 (of bits 0 through 8) and transfer 4 (of transfer 0 through 7). The command bit field is shown as c0 through c7, and consists of sixty-four bits of information provided to the module over eight transfers. The ECC bit field (ecc0 through ecc3) consists of thirty-two bit positions over eight transfers, but is actually formatted in groups of sixteen bits. Each sixteen bit packet consists of four transfers over each of the four wires, and provide the bus level fault detection and correction across each group of 4 bus transfers. The spare bit position may be used to logically replace any of the twenty-one wires, also defined as bitlanes, used to transfer bits in the command, data and ECC fields, should a failure occur in one of those bitlanes that results in errors that exceed a system-assigned failure threshold limit. Using this exemplary embodiment of the present invention, provides that out of the one hundred and seventy-six possible bit positions, one hundred and sixty-eight are available for the transfer of information to the memory module 806, and of those one hundred and sixty-eight bit positions, thirty-two bit positions are further assigned to providing ECC protection on the bus transfers themselves, thereby allowing a total of one hundred and thirty-six bit positions to be used for the transfer of information to the memory module 806.

Exemplary embodiments of the present invention provide a bus speed multiplier that may be utilized to provide enhanced operating frequency by adopting a point-to-point structure, while increasing system density via the daisy chain structure.

As described above, the embodiments of the invention may be embodied in the form of computer-implemented processes and apparatuses for practicing those processes. Embodiments of the invention may also be embodied in the form of computer program code containing instructions embodied in tangible media, such as floppy diskettes, CDROMs, hard drives, or any other computerreadable storage medium, wherein, when the computer program code is loaded into and executed by a computer, the computer becomes an apparatus for practicing the invention. The present invention can also be embodied in the form of computer program code, for example, whether stored in a storage medium, loaded into and/or executed by a computer, or transmitted over some transmission medium, such as over electrical wiring or cabling, through fiber optics, or via electromagnetic radiation, wherein, when the computer program code is loaded into and executed by a computer, the computer becomes an apparatus for practicing the invention. When implemented on a general purpose microprocessor, the computer program code segments configure the microprocessor to create specific logic circuits.

While the invention has been described with reference to exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims. Moreover, the use of the terms first, second, etc. do not denote any order or importance, but rather the terms first, second, etc. are used to distinguish one element from another.

## Claims

1. A memory subsystem for providing a bus speed multiplier, the memory subsystem comprising: one or more memory modules; a memory controller; and one or more memory busses, wherein the memory controller and the memory modules are interconnected by a packetized multi-transfer interface via the memory busses.

2. The memory subsystem of claim 1, wherein the one or more memory modules operate at a memory module data rate and the one or more memory busses operate at four times the memory module data rate.

3. The memory subsystem of claim 1 wherein the packetized multi-transfer interface includes bus level error code fault detection and correction.

4. The memory subsystem of claim 1 wherein the memory busses include unidirectional busses.

5. The memory subsystem of claim 4 wherein the unidirectional busses include an upstream memory bus and a downstream memory bus.

6. The memory subsystem of claim 5 wherein the upstream memory bus includes twenty-three signals and a clock.

7. The memory subsystem of claim 6 wherein the twenty-three signals are single ended and the clock is differential.

8. The memory subsystem of claim 5 wherein the downstream memory bus includes twenty-two signals and a clock.

9. The memory subsystem of claim 8 wherein the twenty-two signals are single ended and the clock is differential.

10. The memory subsystem of claim 5 wherein the upstream memory bus and downstream memory bus include at least one spare bit lane.

11. The memory subsystem of claim 10 wherein the spare bit lane is used exclusively for spare bits.

12. The memory subsystem of claim 1 wherein the memory busses include an upstream memory bus and a downstream memory bus, and wherein the upstream memory bus and the downstream memory bus together include forty-five single ended high speed signals and two differential clocks.

13. The memory subsystem of claim 1 wherein each of the memory modules includes a bus-to-bus converter to convert signals between the memory busses and the memory modules.

14. The memory subsystem of claim 1 wherein the memory modules operate as slave devices to the memory controller.

15. The memory subsystem of claim 1 wherein if there are two or more memory modules, then one of the memory modules is directly connected to the memory controller and another of the memory modules is cascade connected to the memory controller.

16. The memory subsystem of claim 1 wherein the memory module includes a bus re-drive function.

17. A method for operating a memory subsystem, the method comprising: in response to receiving a downstream frame of bits from a downstream memory bus operating at four times a memory module data rate: transmitting the received downstream frame of bits to a next memory module on the downstream memory bus; converting the received downstream frame into the memory module data rate; and processing the downstream frame in response to the converting; and in response to receiving an upstream frame of bits from an upstream memory bus: transmitting the received upstream frame of bits to a previous memory module or controller on the upstream bus.

18. A storage medium encoded with machine-readable computer program code for providing a bus speed multiplier, the storage medium including instructions for causing a computer to implement the method of claim 17.
